# EUROPEAN PATENT APPLICATION

(11) **EP 4 079 276 A1**
(43) Date of publication of application: **26.10.2022**
(21) Application number: 20903522.9
(22) Date of filing: 21.05.2020
(51) Int. Cl.: A61H 3/00, B62D 57/032

(54) **LENGTH-ADJUSTABLE LOWER LIMB STRUCTURE, AND EXOSKELETON ROBOT USING SAME**

(30) Priority: 20.12.2019 CN 201911328380
(71) Applicant: Beijing AI-Robotics Technology Co., Ltd., Beijing Economic And Technological Development Zone Beijing 100176 (CN)
(72) Inventor: SHUAI, Mei, Beijing 100195 (CN)
(74) Representative: SSM Sandmair
(86) International application number: PCT/CN2020/091626
(87) International publication number: WO 2021/120515

(57) **Abstract**

The disclosure relates to a lower limb structure, comprising: a hip joint assembly comprising a hip joint support, a hip joint driver fixed to the hip joint support, and a hip joint transmission handle driven by the hip joint driver; a thigh rod connected to the hip joint transmission handle and driven by the hip joint driver; a knee joint assembly comprising a knee joint fixing base, a knee joint driver fixed on the knee joint fixing base, and a knee joint transmission handle driven by the knee joint driver, wherein the knee joint fixing base comprises a sleeve and a connector which is connected to the knee joint driver, and the sleeve is slidably fixed on the thigh rod along an extension direction of the thigh rod; and a lower leg rod connected to the knee joint transmission handle and driven by the knee joint driver, wherein the thigh rod does not coincide with a line connecting centers of the hip joint driver and the knee joint driver, such that a movement range of the knee joint on the thigh rod regulator is larger. The disclosure also relates to an exoskeleton robot having the lower limb structure.

## Description

### FIELD

The disclosure relates to a lower limb structure, and particularly, a length-adjustable lower limb structure applied to a lower limb of a robot, and an exoskeleton robot using the same.

### BACKGROUND

The disclosure aims to restore and enhance walking ability of patients with chronic osteoarticular disease (OAD), spinal hip injury and brain injury. Currently, in patients with lower limb function disturbance, most are caused by osteoarticular disease (OAD), and the remaining is mainly caused by spinal hip injury and brain injury. Currently, exoskeleton robots applicable for these patients also developed in the market to assist in restoring their action capability of the lower limbs.

As for the exoskeleton robot in the prior art, the lower limb structure can be substantially divided into length-fixed type and length-adjustable type. As for the lower limb structure with a fixed length, the manufacturing method is simple, but the fixed length allows a lower limb of the robot not to be suitable for patients at various heights. Although the lower limb structure with the fixed length can be adjusted after the patient takes off, after taking off, such repeated wearing can be adjusted to consume time and energy of the patients. As for the lower limb structure with an adjustable length, the sleeve is often adjusted in a form of retraction sleeve, and the length-adjustable range is limited. For example, the minimum length of such length-adjustable lower limb structure is substantially half of the maximum length, and although it can be designed to be the form of multiple retraction sleeves, design of the multiple retraction sleeve reduces strength of the lower limb structure.

Therefore, there is a need to develop a lower limb structure that overcomes the above defects, and can adjust a length of the lower limb structure within a large range while still having a desired strength.

### SUMMARY

The technical problem solved by the disclosure is a length-adjustable lower limb structure applied to a lower limb of a robot, comprising:
a hip joint assembly comprising a hip joint support, a hip joint driver fixed to the hip joint support, and a hip joint transmission handle driven by the hip joint driver;
a thigh rod connected to the hip joint transmission handle, so as to be driven by the hip joint driver;
a knee joint assembly comprising a knee joint fixing base, a knee joint driver fixed on the knee joint fixing base, and a knee joint transmission handle driven by the knee joint driver, wherein the knee joint fixing base comprises a sleeve and a connector which is connected to the knee joint driver, and the sleeve is slidably fixed on the thigh rod along an extension direction of the thigh rod; and
a lower leg rod connected to the knee joint transmission handle and driven by the knee joint driver,
wherein the thigh rod does not coincide with a line connecting centers of the hip joint driver and the knee joint driver.

According to the lower limb structure in one or more embodiments of the disclosure, wherein,
the thigh rod further comprises a thigh rod limit assembly comprising a first limit post, wherein,
the thigh rod is provided with a plurality of first limit holes along the extension direction of the thigh rod, and the sleeve is formed with a first limit opening having a position aligned with one of the plurality of first limit holes; and
the first limit post passes through the first limit opening to be clamped in one of the plurality of first limit holes.

According to the lower limb structure in one or more embodiments of the disclosure, the thigh rod limit assembly further comprises an adjusting sleeve and a locking nut, wherein,
the thigh rod passes through the adjusting sleeve and in thread engagement with the adjusting sleeve, such that a position of the adjusting sleeve along the extension direction of the thigh rod is variable, and the adjusting sleeve is located below the sleeve, such that an upper end surface of the adjusting sleeve is in contact with a lower end surface of the sleeve;
the locking nut surrounds the upper end surface of the adjusting sleeve and the lower end surface of the sleeve to maintain the contact between the upper end surface of the adjusting sleeve and the lower end surface of the sleeve or maintain a constant axial distance between the upper end surface of the adjusting sleeve and the lower end surface of the sleeve.

According to the lower limb structure in one or more embodiments of the disclosure, the thigh rod limit assembly further comprises a plurality of roll balls between the upper end surface of the adjusting sleeve and the lower end surface of the sleeve, such that the upper end surface of the adjusting sleeve and the lower end surface of the sleeve are in rolling contact via the plurality of roll balls.

According to the lower limb structure in one or more embodiments of the disclosure, the thigh rod limit assembly further comprises a roll ball holding frame for holding the plurality of roll balls.

According to the lower limb structure in one or more embodiments of the disclosure, wherein,
the thigh rod is formed with a groove along the extension direction of the thigh rod, the plurality of first limit holes are provided in the groove;
a boss is formed on an inner surface of the sleeve, the boss is clamped in the groove when the thigh rod passes through the sleeve.

According to the lower limb structure in one or more embodiments of the disclosure, further comprises a sole assembly connected to a lower end of the lower leg rod.

According to the lower limb structure in one or more embodiments of the disclosure, the lower leg rod comprises:
a hollow lower leg fixing rod having an upper end connected to the knee joint transmission handle; and
a lower leg adjusting rod slidably fitted into the lower leg fixing rod.

According to the lower limb structure in one or more embodiments of the disclosure, wherein,
the lower leg rod further comprises a lower leg rod limit assembly comprising a second limit post, wherein,
the lower leg adjusting rod is provided with a plurality of second limit holes along the extension direction of the lower leg adjusting rod, and the lower leg fixing rod is formed with a second limit opening aligned with one of the plurality of second limit holes; and
the second limit post passes through the second limit opening to be clamped in one of the plurality of second limit holes.

According to the lower limb structure in one or more embodiments of the disclosure, the lower leg rod limit assembly further comprises a limit sleeve and an adjusting nut fixed to an inner surface of the limit sleeve, wherein,
the adjusting sleeve surrounds a lower end of the lower leg fixing rod, such that the lower end of the lower leg fixing rod abuts against the adjusting nut, and the adjusting sleeve is rotatable relative to the lower leg fixing rod;
the adjusting nut surrounds an outer surface of the lower leg adjusting rod and in thread engagement with the lower leg adjusting rod, such that the lower leg adjusting rod retracts into or extends out of the lower leg fixing rod.

According to the lower limb structure in one or more embodiments of the disclosure, a lower end of the lower leg rod is formed with a flange, the inner surface of the limit sleeve is formed with an retracted step, and the flange is positioned between the retracted step and the adjusting nut.

According to the lower limb structure in one or more embodiments of the disclosure, the lower leg rod limit assembly further comprises:
a plurality of roll balls disposed between the flange and the retracted step; and
a roll ball holding frame for holding the plurality of roll balls.

The disclosure further provides an exoskeleton robot, comprising:
lower limbs having the lower limb structure according to the embodiments described above;
a waist support device mounted with the lower limbs; and
a suspension device on which the waist support device is mounted.

According to the exoskeleton robot in one or more embodiments of the disclosure, the suspension device comprises: a suspension frame; a suspension mechanism mounted on the suspension frame, and the waist support device mounted on the suspension mechanism; and an auxiliary mechanism mounted on the suspension frame and connected to the suspension mechanism, the auxiliary mechanism outputs an auxiliary force to assist the suspension mechanism to suspend the waist support device and the lower limbs.

According to the exoskeleton robot in one or more embodiments of the disclosure, after the waist support device is suspended to a predetermined position, the suspension mechanism is locked, and when the user moves through the lower limbs, and drives the waist support device to move up and down relative to the predetermined position, the auxiliary mechanism further outputs the auxiliary force to assist movement of the lower limbs.

According to the exoskeleton robot in one or more embodiments of the disclosure, the suspension frame comprises a suspension bearing rod and two longitudinal sliding rods arranged in parallel on both sides of the suspension bearing rod, and the auxiliary suspension mechanism and the auxiliary mechanism are mounted on the suspension bearing rod.

According to the exoskeleton robot in one or more embodiments of the disclosure, the suspension mechanism comprises: at least one pulley mounted on the suspension bearing rod; and a rope mounted on the at least one pulley and connected to the auxiliary mechanism at one end, a member to be suspended is mounted on the rope, and suspended by pulling the other end of the rope.

According to the exoskeleton robot in one or more embodiments of the disclosure, the suspension bearing rod is provided with a through hole through which a part of the rope passes, and the member to be suspended is mounted on a part of the rope passing through the through hole.

According to the exoskeleton robot in one or more embodiments of the disclosure, the auxiliary mechanism comprises: a fixing base fixedly connected to an end part of the suspension bearing rod; and a spring having one end connected to the fixing base, and the other end connected to one end of the rope.

According to the exoskeleton robot in one or more embodiments of the disclosure, the suspension device further comprises a winch connected to the other end of the rope, the winch is rotated to drive the rope to slide between the at least one pulley to suspend the member to be suspended, and when the member is suspended to the predetermined position, the winch is locked.

Effect of the disclosure over the prior art is that: by laterally offseting the thigh rod from a line connecting centers of the hip joint driving assembly and the knee joint driving assembly, an actual length of the thigh rod can be adjusted only by adjusting the position of the knee joint driving assembly on the thigh rod, which expands the length-adjustable range of the lower limb structure. Meanwhile, since the length within a large range can be adjusted only using single regulator, as compared to the length-adjustable mechanism with the multiple retraction sleeve, more ideal strength can be obtained.

### BRIEF DESCRIPTION OF THE DRAWINGS

FIG. 1 is a schematic view of a lower limb structure according to embodiments of the disclosure.
FIGS. 2A and 2B are local explosive views of the lower limb structure in FIG. 1.
FIG. 3 is a local sectional view of the lower limb structure in FIG. 1.
FIG. 4 is a local explosive view of the lower limb structure in FIG. 1.
FIG. 5 is a local sectional view of the lower limb structure in FIG. 1.
FIG. 6 is a structural view of an exoskeleton robot according to embodiments of the disclosure.
FIG. 7 is a structural view of a suspension device of the exoskeleton robot shown in FIG. 6.

### DETAILED DESCRIPTION

Concerning detailed contents and technical specification of the disclosure, now further explanations are made using one preferable embodiment, but the disclosure shall not be limited thereto.

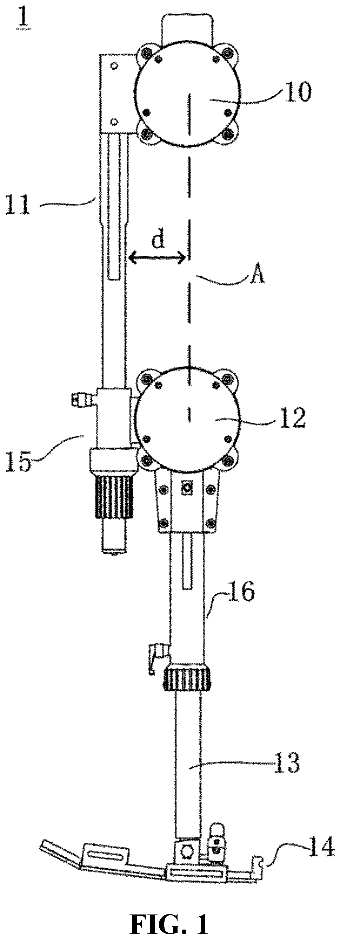

FIG. 1 is a schematic view of a lower limb structure 1 according to embodiments of the disclosure. As shown in FIG. 1, the lower limb structure 1 comprises a hip joint assembly 10, a thigh rod 11, a knee joint assembly 12 and a lower leg rod 13. The thigh rod 11 has one end fixedly connected to the hip joint assembly 10, and the hip joint assembly 10 is configured to imitate a hip joint of human to rotate, and thus the thigh rod 11 may rotate with rotation of the hip joint assembly 10 to imitate action of the legs when human walks. The thigh rod 11 has the other end fixedly connected to the knee joint assembly 12, so when rotating, the thigh rod 11 also drives the knee joint assembly 12 to move. The lower leg rod 13 has one end connected to the knee joint assembly 12, and the knee joint assembly 12 is configured to imitate a knee joint of human to rotate, so the lower leg rod 13 may rotate with rotation of the knee joint assembly 12. Therefore, the hip joint assembly 10 is controlled to rotate to drive the thigh rod 11 connected thereto to rotate, and the thigh rod 11 further drives the knee joint assembly 12 connected thereto to move while the knee joint assembly 12 itself is also controlled to rotate to drive the lower leg rod 13 connected thereto to rotate. Under coordination of the hip joint assembly 10, the thigh rod 11, the knee joint assembly 12 and the lower leg rod 13, the lower limb structure may imitate human's walking.

As shown in FIG. 1, the lower limb structure 1 may further comprise a sole assembly 14 connected to the lower leg rod 13, so the lower limb structure 1 may further imitate human's walking.

As shown in FIG. 1, the lower limb structure 1 may further comprise a thigh rod limit assembly 15. The thigh rod 11 is connected to the knee joint assembly 12 through the thigh rod limit assembly 15, wherein the thigh rod limit assembly 15 is fixedly connected to the knee joint assembly 12, and slidably connected to the thigh rod 11, such that the thigh rod limit assembly 15 can slide along a length of the thigh rod 11 to adjust a position of the thigh rod limit assembly 15 relative to the thigh rod 11, thereby adjusting a position of the knee joint assembly 12 relative to the thigh rod 11. Here, a distance from the thigh rod limit assembly 15 to one end of the thigh rod 11 and the hip joint assembly 10 is an actual length of the thigh rod in use. Therefore, the actual length of the thigh rod in the lower limb structure 1 in use can be realized to adjust the length by adjusting the position of the thigh rod limit assembly 15 relative to the thigh rod 11.

In this embodiment, the thigh rod 11 is configured not to coincide with a line A connecting centers of the hip joint assembly 10 and the knee joint assembly 12. For example, as shown in FIG. 1, the thigh rod 11 can offset a distance d from the line A. Although FIG. 1 illustrates that the thigh rod 11 offsets the distance d in an advancing direction (a direction from right to left in FIG. 1) relative to the line A, the disclosure is not limited thereto. For example, the thigh rod 11 also can offset in a backward direction (a direction from left to right in FIG. 1) relative to the line A, or offset in other direction (a direction in and out of the paper in FIG. 1) relative to the line A, as long as the thigh rod 11 does not coincide with the line A. Therefore, as compared to the length-adjustable lower limb structure applying retraction sleeve on the thigh rod, the lower limb structure 1 in this embodiment can adjust the actual length of the thigh rod within a length rang of the entire thigh rod 11, which significantly increases the length-adjustable range of the thigh rod, and allows the lower limb structure 1 to be suitable for use of all people.

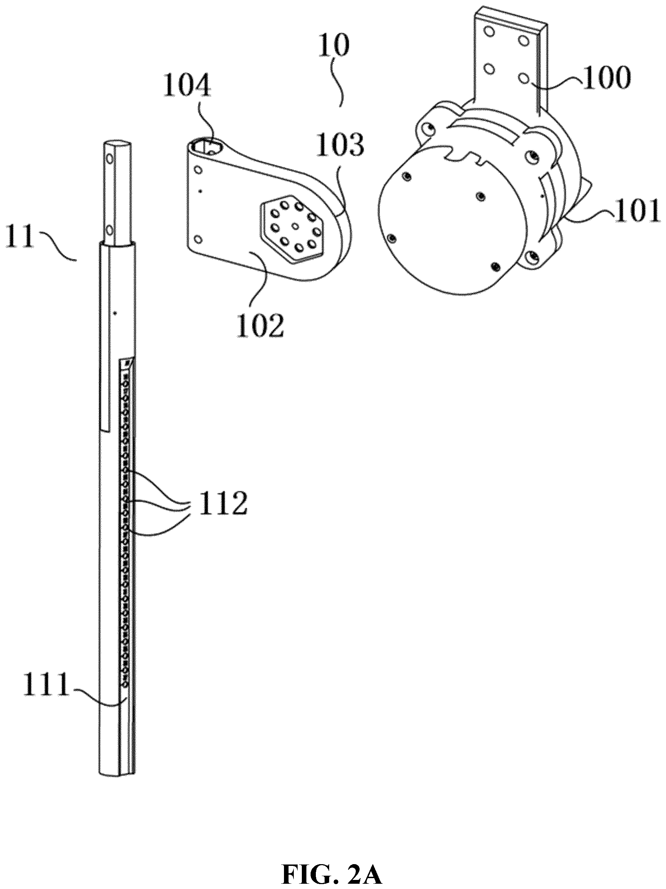

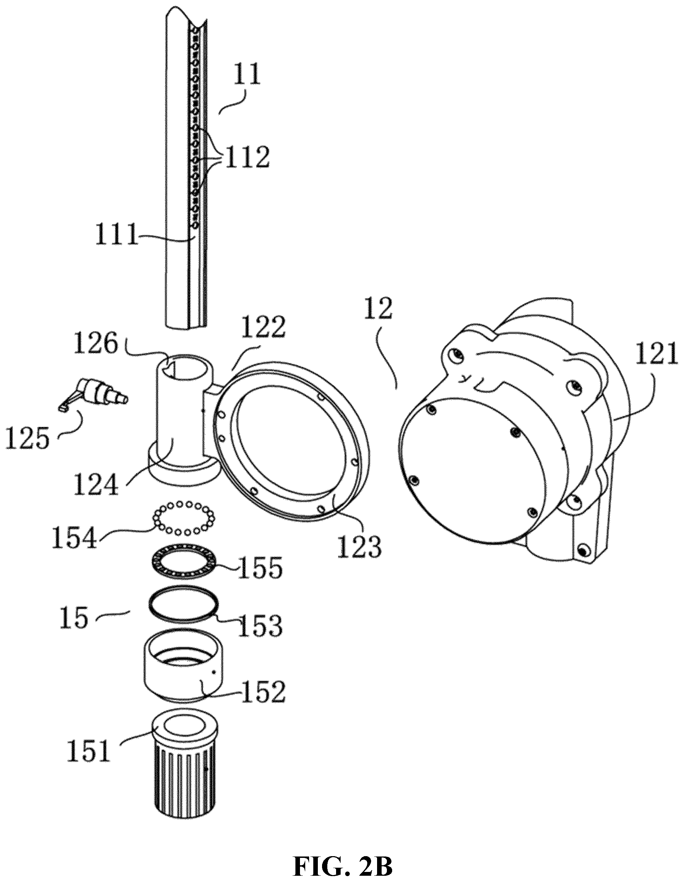

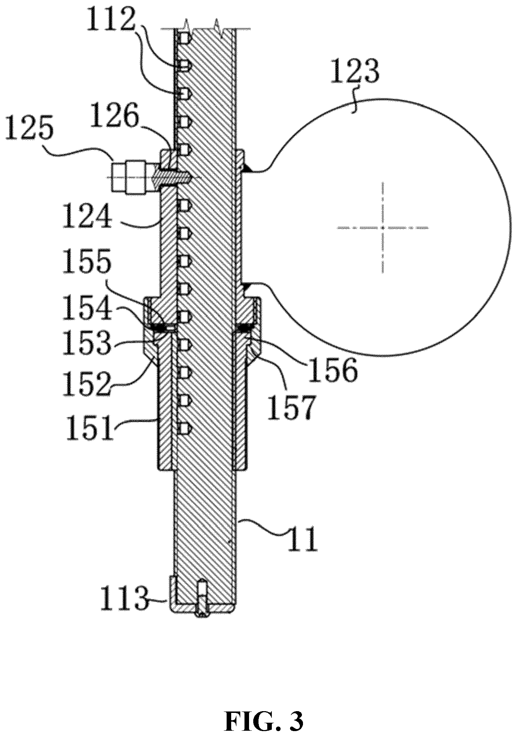

FIGS. 2A and 2B are local explosive views of the lower limb structure 1 in FIG. 1, and FIG. 3 is a local sectional view of the lower limb structure 1 in FIG. 1.

As shown in FIG. 2A, the hip joint assembly 10 has a hip joint support 100, a hip joint driver 101 (e.g., a motor) fixed to the hip joint support 100, and a hip joint transmission handle 102 driven by the hip joint driver 101. The hip joint transmission handle 102 comprises a fixing base 103 fixedly connected to the hip joint driver 101 and a sleeve 104 connected to the thigh rod 11. One end of the thigh rod 11 is inserted into the sleeve 104, and the thigh rod 11 is fixedly connected to the sleeve 104 through a fixing member such as a screw.

The thigh rod 11 has a groove 111 (e.g., a V-shaped groove) arranged along a longitudinal direction of the thigh rod 11 and a plurality of limit holes 112 formed along the longitudinal direction of the thigh rod 11. These limit holes 112 can be formed in the groove 111, and arranged at an equal interval. In some embodiments, the limit holes 112 can be formed only on a part of length of the thigh rod 11, or can be formed on an entire length of the thigh rod 11.

As shown in FIGS. 2B and 3, the knee joint assembly 12 comprises a knee joint driver 121 (e.g., a motor) and a knee joint fixing base 122, and the knee joint fixing base 122 comprises a connector 123 connected to the knee joint driver 121 and a sleeve 124 connected to the thigh rod 11. The thigh rod 11 is fitted in the sleeve 124. Here, the A is also actually a line connecting centers of the hip joint driver 101 and the knee joint driver 121.

In some embodiments, a boss 126 is formed in the sleeve 124, a position of the boss 126 corresponds to a position of the groove 111 on the thigh rod 11, such that when the thigh rod 11 is fitted in the sleeve 124, the boss 126 is just clamped in the groove 111, thereby preventing relative rotation of the thigh rod 11 and the knee joint fixing base 122 around an axis of the thigh rod.

The sleeve 124 is formed with apertures (not shown), and when the apertures on the sleeve 124 are aligned with the limit holes 112 on the thigh rod 11, a limit post 125 can pass through the apertures and the limit holes to fix the sleeve 124 and the thigh rod 11. Therefore, the sleeve 124 can slide along a longitudinal direction of the thigh rod 11 to adjust an actual length of the thigh rod 11. After the actual length of the thigh rod 11 is adjusted, one aperture of the sleeve 124 is aligned with the limit holes 112 at corresponding positions of the thigh rod 11, and the sleeve 124 and the thigh rod 11 are fixed using the limit post 125. In some embodiments, scale lines and size markings are also provided near the limit holes 112, thereby facilitating quick location and adjustment of the length of the thigh rod.

In some embodiments, the limit post 125 has one end with a handle, and the other end with a tapered tip, an outer periphery of the limit post 125 and an inner periphery of the apertures of the sleeve 124 are provided with threads mating with each other, and the limit holes 112 of the thigh rod are configured as taper holes. Therefore, during operation, the limit post 125 can be rotated into the apertures of the sleeve 124 through the handle, such that the tapered tip of the limit post 125 abuts against the limit holes 112, thereby applying a radial pushing force to the thigh rod, and preventing the thigh rod from swaying from left to right along a radial direction after location.

As shown in FIGS. 2B and 3, the limit assembly 15 comprises an adjusting sleeve 151 and a locking nut 152. The thigh rod 11 is also fitted in the adjusting sleeve 151, such that the adjusting sleeve 151 is located below the sleeve 124, and an upper end surface of the adjusting sleeve 151 is in contact with a lower end surface of the sleeve 124. In some embodiments, an upper end of the adjusting sleeve 151 may have a flange 156, such that an upper end surface of the flange 156 is in contact with the lower end surface of the sleeve 124. In some embodiments, an outer surface of the thigh rod 11 and an inner surface of the adjusting sleeve 151 may form threads mating with each other, such that the adjusting sleeve 151 can allow the adjusting sleeve 151 to rotate to a desired position on the thigh rod 11 in a thread engagement manner. Since the upper end surface of the adjusting sleeve 151 is in contact with the lower end surface of the sleeve 124, under movement of the adjusting sleeve 151, the sleeve 124 may be moved correspondingly to an desired position on the thigh rod 11, so a position of the sleeve 124 on the thigh rod 11 may be adjusted by rotating the adjusting sleeve 151, thereby adjusting a distance between the knee joint assembly 12 and the hip joint assembly 10, i.e., an actual length of the thigh rod 11.

The locking nut 152 surrounds a position where the adjusting sleeve 151 is in contact with the sleeve 124, i.e., surrounding the upper end surface of the adjusting sleeve 151 and the lower end surface of the sleeve 124. In some embodiments, an inner surface of the locking nut 152 and an outer surface of the sleeve 124 may form threads mating with each other, and a lower end of the locking nut 152 may form a step part 157, such that the flange 156 is clamped in the step part 157 to limit a position of the adjusting sleeve 151 along a longitudinal direction of the thigh rod 11. Therefore, during use, the locking nut 152 holds the adjusting sleeve 151 and the sleeve 124 together, and when the adjusting sleeve 151 and the sleeve 124 are adjusted to the desired position on the thigh rod 11, the locking nut 152 is rotated tightly, such that the locking nut 152 can closely maintain contact between the adjusting sleeve 151 and the sleeve 124, or maintain a constant axial distance between the adjusting sleeve 151 and the sleeve 124, thereby firmly locking of the thigh rod, the sleeve 124, the adjusting sleeve 151 and the locking nut 152.

In some embodiments, the limit assembly 15 may further comprise a pad 153 between the locking nut 152 and the sleeve 124 to adjust an axial relative position between the locking nut 152 and the sleeve 124, and apply a pre-tightened force to thread connection therebtween, such that the connected threads are more fastened.

In some embodiments, the limit assembly 15 may further comprise roll balls 154 (e.g., steel balls) between the upper end surface of the adjusting sleeve 151 and the lower end surface of the sleeve 124, and the roll balls 154 can be held between the upper end surface of the adjusting sleeve 151 and the lower end surface of the sleeve 124 by a holding frame 155 to limit radial motion of the roll balls 154. A gravity of the sleeve 124 (or the knee joint fixing base 122) and a force born along the longitudinal direction of the thigh rod 11 are delivered to the adjusting sleeve 151 through the roll balls 154, and when the adjusting sleeve 151 is rotated, the sleeve 124 (or the knee joint fixing base 122) is driven to move up and down along the longitudinal direction of the thigh rod 11 through transmission of the roll balls 154.

In some embodiments, a bottom end of the thigh rod 11 may be further provided with a baffle plate 113 to limit the adjusting range of the adjusting sleeve 151 along the longitudinal direction of the thigh rod 11.

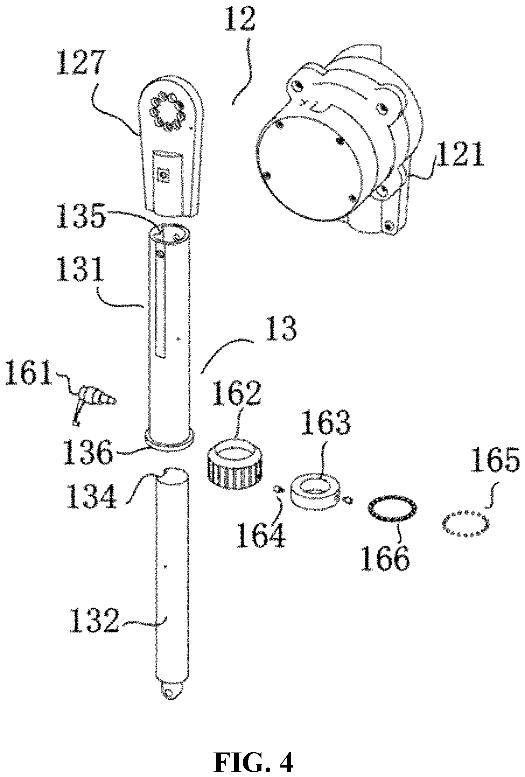

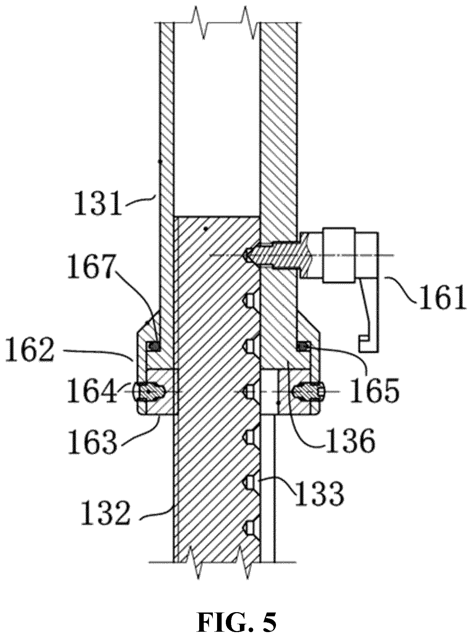

Hereinafter a structure of the lower leg rod 13 is described with reference to FIGS. 4 and 5. FIG. 4 is an explosive view of the lower leg rod 13 and a lower leg rod limit assembly 16, and FIG. 5 is a sectional view of the lower leg rod 13 and the lower leg rod limit assembly 16.

The lower leg rod 13 comprises a lower leg fixing rod 131 and a lower leg adjusting rod 132. The lower leg fixing rod 131 has one end fixedly connected to a knee joint transmission handle 127, and the knee joint transmission handle 127 is connected to the knee joint driver 121, such that the lower leg rod 13 can rotate by the driving of the knee joint assembly 12. The lower leg fixing rod 131 is hollow, such that the lower leg adjusting rod 132 can be fitted therein, and the lower leg adjusting rod 132 can slide in the lower leg fixing rod 131 along a length of the lower leg fixing rod 131.

The lower leg adjusting rod 132 is formed with a plurality of limit holes 133 (e.g., taper holes) along a longitudinal direction. These limit holes 133 can be arranged at an equal interval, and the lower leg fixing rod 131 is formed with apertures. When the lower leg adjusting rod 132 is fitted in the lower leg fixing rod 131, the apertures of the lower leg fixing rod 131 may be aligned with one of the plurality of limit holes 133, and a length of the lower leg rod 13 may be adjusted by aligning the apertures of the lower leg fixing rod 131 with different limit holes. The lower leg adjusting rod 132 and the lower leg fixing rod 131 may be fixed to each other through the limit post passing through the apertures and the limit holes, so the length of the lower leg rod 13 may be fixedly adjusted. In some embodiments, scale lines and size markings are also provided near the limit holes 133, thereby facilitating quick location and adjustment of the length of the lower leg rod.

In some embodiments, a groove 134 (e.g., a V-shaped groove) may be formed on an outer surface of the lower leg adjusting rod 132 along the longitudinal direction, and the limit holes 133 may be formed in the groove 134. A boss 135 may be formed correspondingly on the inner surface of the lower leg fixing rod 131. When the lower leg adjusting rod 132 is fitted in the lower leg fixing rod 131, the boss 135 is clamped in the groove 134, thereby preventing relative rotation of the lower leg adjusting rod 132 and the lower leg fixing rod 131 around an axis of the lower leg rod.

The lower leg rod limit assembly 16 comprises a limit post 161. When the apertures of the lower leg fixing rod 131 is aligned with one of the plurality of limit holes 133, the limit post 161 passes through the apertures and the limit holes to be clamped, such that the lower leg adjusting rod 132 and the lower leg fixing rod 131 are fixed to each other. In some embodiments, the limit post 161 has one end with a handle, and the other end with a tapered tip. An outer periphery of the limit post 161 and an inner periphery of the apertures of the lower leg fixing rod 131 are provided with threads mating with each other. Therefore, the limit post 161 can be rotated into the apertures of the lower leg fixing rod 131 through the handle, such that the tapered tip of the limit post 161 abuts against the limit holes 133, thereby applying a radial pushing force to the lower leg adjusting rod 132, and preventing the lower leg adjusting rod 132 from swaying from left to right along a radial direction after location.

The lower leg rod limit assembly 16 further comprises a limit sleeve 162 and an adjusting nut 163 fixedly connected to the limit sleeve 162. For example, the adjusting nut 163 may be fixed through a limit screw 164 and the limit sleeve 162.

The limit sleeve 162 surrounds a lower end of the lower leg fixing rod 131, and may rotate around an axis of the lower leg fixing rod 131, but a relative position of the limit sleeve 162 and the lower leg fixing rod 131 on a longitudinal direction of the lower leg fixing rod 131 is maintained unchanged. In some embodiments, the lower end of the lower leg fixing rod 131 may be formed with a flange 136, the limit sleeve 162 is formed with an retracted step 167, and the flange 136 and the step 167 mate with each other, such that a lower surface of the step 167 is in contact with an upper surface of the flange 136.

The adjusting nut 163 is fixed to a lower end of the limit sleeve 162, and an upper end surface of the adjusting nut 163 is in contact with a lower end surface of the lower leg fixing rod 131 (a lower end surface of the flange 136). Therefore, a combination of the limit sleeve 162 and the adjusting nut 163 is clamped together with the flange 136, and the flange 136 limits positions of the limit sleeve 162 and the adjusting nut 163 on the longitudinal direction of the lower leg fixing rod 131, such that a relative position of the limit sleeve 162 (and the adjusting nut 163) and the lower leg fixing rod 131 on the longitudinal direction of the lower leg fixing rod 131 is maintained unchanged. In some embodiments, roll balls 165 (e.g., steel balls) may be further provided between the step 167 and the flange 136, instead of surface contact with rolling contact, thereby reducing rotational friction, and reducing a torque desired by rotation of the adjusting sleeve 162. The roll balls 165 can be held by a holding frame 166.

An inner surface of the adjusting nut 163 and an outer surface of the lower leg adjusting rod 132 form threads mating with each other. Therefore, when the limit sleeve 162 rotates, the adjusting nut 163 rotates accordingly, and the lower leg adjusting rod 132 may retract into or extend out of the lower leg fixing rod 131 by engaged transmission of the threads between the adjusting nut 163 and the lower leg adjusting rod 132, thereby adjusting the length of the lower leg rod.

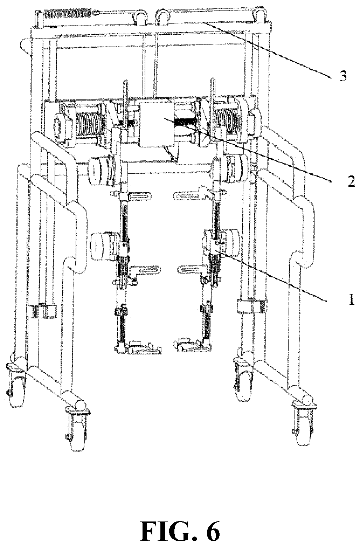

Referring to FIG. 6, FIG. 6 is a structural view of an exoskeleton robot. As shown in FIG. 6, the exoskeleton robot comprises two lower limbs 1, a waist support device 2 and a suspension device 3. The waist support device 2 is connected to the suspension device 3, and the two lower limbs 1 are connected to the waist support device 2. In this embodiment, the lower limbs 1 have the lower limb structure described above, so the details are not described here.

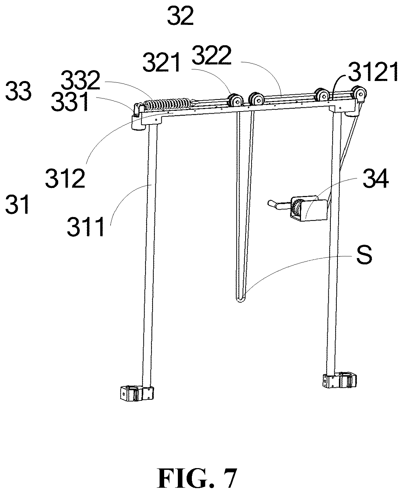

Further, referring to FIG. 7, FIG. 7 is a structural view of the suspension device 3 of the exoskeleton robot. As shown in FIG. 7, the suspension device of the exoskeleton robot comprises a suspension frame 31, a suspension mechanism 32 and an auxiliary mechanism 33.

Referring to both FIGS. 6 and 7, the suspension mechanism 32 is mounted on the suspension frame 31, and the waist support device 2 is mounted on the suspension mechanism 32. The auxiliary mechanism 33 is mounted on the suspension frame 31, and connected to the suspension mechanism 32. The auxiliary mechanism 33 outputs an auxiliary force to assist the suspension mechanism 32 to suspend the waist support device 2 connected to the lower limbs 1. After the waist support device 2 is suspended to a predetermined position, the suspension mechanism 32 is locked, and when the waist support device 2 moves relative to the predetermined position, the auxiliary mechanism 33 also outputs an auxiliary force to assist movement of the waist support device 2 and the lower limbs 1.

Further, the suspension frame 31 comprises two longitudinal sliding rods 311 arranged in parallel and a suspension bearing rod 312. The suspension bearing rod 312 is vertically connected to ends of the two longitudinal sliding rods 311. The suspension bearing rod 312 is provided with a bearing groove 3121 extending from one end of the suspension bearing rod 312 to the other end, and the bearing groove 3121 is provided with a through hole. The suspension mechanism 32 comprises four pulleys 321 and a rope 322. The four pulleys 321 are mounted in parallel on the bearing groove 3121. The rope 322 is mounted on the four pulleys 321, and has one end connected to the auxiliary mechanism 33, a part S of the rope 322 passes through the through hole, and the waist support device 2 is mounted on the part S of the rope 322 passing through the through hole (for example, the waist support device 2 is mounted with pulleys, and the part S is connected to the pulleys), and suspended by pulling the other end of the rope 322.

More further, the auxiliary mechanism 33 comprises a fixing base 331 fixedly connected to an end part of the bearing groove 3121, and a spring 332 having one end connected to the fixing base 331, and the other end connected to one end of the rope 322. The suspension bearing rod 312 is further provided with multiple scales, and a tension of the spring 332 is adjusted according to the multiple scales, such that the auxiliary mechanism 33 outputs different auxiliary forces to be adapted to weights of the patients.

Still further, the suspension device further comprises a winch 34 connected to the other end of the rope 322. The winch 34 is rotated to drive the rope 322 to slide among the four pulleys 321 to suspend the waist support device 2 and the lower limb 3. It shall be noticed that in this embodiment, the four pulleys are taken as a preferable embodiment, but the disclosure is not limited thereto.

The disclosure is only preferable embodiment of the disclosure, not limiting the implementing scope of the disclosure, and those skilled in the art shall make various corresponding modifications and variations according to the disclosure without departing from spirit and essence of the disclosure, but these corresponding modifications and variations shall belong to the protection scope of the appended claims of the disclosure.

## Claims

1. A length-adjustable lower limb structure applied to a lower limb of a robot, comprising:
a hip joint assembly comprising a hip joint support, a hip joint driver fixed to the hip joint support, and a hip joint transmission handle driven by the hip joint driver;
a thigh rod connected to the hip joint transmission handle, so as to be driven by the hip joint driver;
a knee joint assembly comprising a knee joint fixing base, a knee joint driver fixed on the knee joint fixing base, and a knee joint transmission handle driven by the knee joint driver, wherein the knee joint fixing base comprises a sleeve and a connector connected to the knee joint driver, the sleeve is slidably fixed on the thigh rod along an extension direction of the thigh rod; and
a lower leg rod connected to the knee joint transmission handle and driven by the knee joint driver,
wherein the thigh rod does not coincide with a line connecting centers of the hip joint driver and the knee joint driver.

2. The lower limb structure according to claim 1, wherein,
the thigh rod further comprises a thigh rod limit assembly comprising a first limit post, wherein,
the thigh rod is provided with a plurality of first limit holes along an extension direction of the thigh rod, and the sleeve is formed with a first limit opening having a position aligned with one of the plurality of first limit holes; and
the first limit post passes through the first limit opening to be clamped in one of the plurality of first limit holes.

3. The lower limb structure according to claim 2, wherein the thigh rod limit assembly further comprises an adjusting sleeve and a locking nut, wherein,
the thigh rod passes through the adjusting sleeve to be in thread engagement with the adjusting sleeve, such that a position of the adjusting sleeve along the extension direction of the thigh rod is variable, and the adjusting sleeve is located below the sleeve, such that an upper end surface of the adjusting sleeve is in contact with a lower end surface of the sleeve;
the locking nut surrounds the upper end surface of the adjusting sleeve and the lower end surface of the sleeve, to maintain the contact between the upper end surface of the adjusting sleeve and the lower end surface of the sleeve or maintain a constant axial distance between the upper end surface of the adjusting sleeve and the lower end surface of the sleeve.

4. The lower limb structure according to claim 3, wherein the thigh rod limit assembly further comprises a plurality of roll balls between the upper end surface of the adjusting sleeve and the lower end surface of the sleeve, such that the upper end surface of the adjusting sleeve and the lower end surface of the sleeve are in rolling contact via the plurality of roll balls.

5. The lower limb structure according to claim 4, wherein the thigh rod limit assembly further comprises a roll ball holding frame for holding the plurality of roll balls.

6. The lower limb structure according to claim 2, wherein,
the thigh rod is formed with a groove along the extension direction of the thigh rod, the plurality of first limit holes are provided in the groove;
a boss is formed on an inner surface of the sleeve, and the boss is clamped in the groove when the thigh rod passes through the sleeve.

7. The lower limb structure according to claim 1, further comprising a sole assembly connected to a lower end of the lower leg rod.

8. The lower limb structure according to claim 1, wherein the lower leg rod comprises:
a hollow lower leg fixing rod having an upper end connected to the knee joint transmission handle; and
a lower leg adjusting rod slidably fitted into the lower leg fixing rod.

9. The lower limb structure according to claim 8, wherein,
the lower leg rod further comprises a lower leg rod limit assembly comprising a second limit post, wherein,
the lower leg adjusting rod is provided with a plurality of second limit holes along an extension direction of the lower leg adjusting rod, and the lower leg fixing rod is formed with a second limit opening aligned with one of the plurality of second limit holes; and
the second limit post passes through the second limit opening to be clamped in one of the plurality of second limit holes.

10. The lower limb structure according to claim 9, wherein the lower leg rod limit assembly further comprises a limit sleeve and an adjusting nut fixed to an inner surface of the limit sleeve, wherein,
the adjusting sleeve surrounds a lower end of the lower leg fixing rod, such that the lower end of the lower leg fixing rod abuts against the adjusting nut, and the adjusting sleeve is rotatable relative to the lower leg fixing rod;
the adjusting nut surrounds an outer surface of the lower leg adjusting rod and in thread engagement with the lower leg adjusting rod, such that the lower leg adjusting rod retracts into or extends out of the lower leg fixing rod.

11. The lower limb structure according to claim 10, wherein a lower end of the lower leg rod is formed with a flange, the inner surface of the limit sleeve is formed with a retracted step, and the flange is positioned between the retracted step and the adjusting nut.

12. The lower limb structure according to claim 11, wherein the lower leg rod limit assembly further comprises:
a plurality of roll balls disposed between the flange and the retracted step; and
a roll ball holding frame for holding the plurality of roll balls.

13. An exoskeleton robot, comprising:
lower limbs having the lower limb structure according to any of claims 1 to 12;
a waist support device mounted with the lower limbs; and
a suspension device on which the waist support device is mounted.

14. The exoskeleton robot according to claim 13, wherein the suspension device comprises:
a suspension frame;
a suspension mechanism mounted on the suspension frame, and the waist support device mounted on the suspension mechanism; and
an auxiliary mechanism mounted on the suspension frame, and connected to the suspension mechanism, the auxiliary mechanism outputs an auxiliary force to assist the suspension mechanism to suspend the waist support device and the lower limbs.

15. The exoskeleton robot according to claim 14, wherein, after the waist support device is suspended to a predetermined position, the suspension mechanism is locked, and when the user moves through the lower limbs, and drives the waist support device to move up and down relative to the predetermined position, the auxiliary mechanism further outputs the auxiliary force to assist movement of the lower limbs.

16. The exoskeleton robot according to claim 15, wherein the suspension frame comprises a suspension bearing rod and two longitudinal sliding rods arranged in parallel on both sides of the suspension bearing rod, and the suspension mechanism and the auxiliary mechanism are mounted on the suspension bearing rod.

17. The exoskeleton robot according to claim 16, wherein the suspension mechanism comprises:
at least one pulley mounted on the suspension bearing rod; and
a rope mounted on the at least one pulley, and connected to the auxiliary mechanism at one end, a member to be suspended is mounted on the rope, and the member is suspended by pulling the other end of the rope.

18. The exoskeleton robot according to claim 17, wherein the suspension bearing rod is provided with a through hole through which a part of the rope passes, and the member to be suspended is mounted on a part of the rope passing through the through hole.

19. The exoskeleton robot according to claim 17, wherein the auxiliary mechanism comprises:
a fixing base fixedly connected to an end part of the suspension bearing rod; and
a spring having one end connected to the fixing base, and the other end connected to one end of the rope.

20. The exoskeleton robot according to claim 17, wherein the suspension device further comprises a winch connected to the other end of the rope, the winch is rotated to drive the rope to slide between the at least one pulley to suspend the member to be suspended, and when the member is suspended to the predetermined position, the winch is locked.
